**Europäisches Patentamt**

**European Patent Office**

**Office européen des brevets**

(11) Numéro de publication: **0 202 154**
**B1**

## (12) FASCICULE DE BREVET EUROPÉEN

(45) Date de publication du fascicule du brevet:
16.03.88

(51) Int. Cl.⁴: **B 62 D 6/02,** B 62 D 5/06

(21) Numéro de dépôt: **86400947.7**

(22) Date de dépôt: **30.04.86**

(54) **Dispositif asservi de contrôle de débit pour installation hydraulique, notamment pour direction assistée de véhicule.**

(30) Priorité: **15.05.85 FR 8507353**

(43) Date de publication de la demande:
**20.11.86 Bulletin 86/47**

(45) Mention de la délivrance du brevet:
**16.03.88 Bulletin 88/11**

(84) Etats contractants désignés:
**DE GB IT**

(56) Documents cité:
**EP-A-0 072 732**
**DE-A-2 410 489**
**DE-A-2 412 337**
**FR-A-2 207 481**

(73) Titulaire: **BENDIX France, 126, rue de Stalingrad,
F-93700 Drancy (FR)**

(72) Inventeur: **François, Marc, 13, rue Georges
Huchon, F-94300 Vincennes (FR)**

(74) Mandataire: **Le Moenner, Gabriel, Division
Technique Service Brevets Bendix Europe 126,
rue de Stalingrad, F-93700 Drancy (FR)**

EP 0 202 154 B1

## Description

La présente invention concerne les dispositifs asservis de contrôle de fluide pour installation hydraulique, notamment pour direction assistée de véhicule, comprenant une source de pression dont la sortie est reliée à un système de commande de moteur hydraulique, le dispositif asservi étant destiné à être interposé dans une conduite de dérivation entre la sortie de la source de pression et une bâche, et comprenant, dans un corps, un ensemble modulateur avec un tiroir sollicité par un ressort et formant une première restriction modulable entre un passage d'entrée destiné à être relié à la sortie de la source, et un passage de sortie destiné à être relié à la bâche, la position du tiroir étant pilotée par un organe de commande électromagnétique en fonction d'un signal électrique de commande, par exemple fonction de la vitesse du véhicule pour une direction assistée.

Un dispositif asservi de contrôle de ce type est décrit dans le document DE-A-2 412 337 qui concerne de fait un dispositif asservi de contrôle de la pression fournie au moteur hydraulique d'une direction assistée, dans lequel le tiroir de l'ensemble modulateur est couplé mécaniquement à un plongeur d'un organe de commande électromagnétique du type solenoïde, la position du plongeur, fonction du signal électrique de commande, commandant directement la position du tiroir, suivant un agencement nécessitant d'exercer en permanence un champ magnétique précis et important sur le plongeur de commande du tiroir et ne permettant pas d'éviter, en fonction notamment de fluctuations du signal de commande électrique, des risques de battements de l'équipage tiroir/plongeur et soumettant de ce fait les éléments - délicats - de cet équipage à des efforts, voire des chocs intempestifs susceptibles d'en affecter rapidement le bon fonctionnement, la création d'un champ magnétique précis imposant, par ailleurs, un système électrique de commande et d'exploitation relativement sophistiqué et onéreux.

La présente invention a pour objet de proposer un dispositif du type sus-mentionné, fonctionnant en régulateur de débit, selon un agencement simple, robuste et fiable, de faibles coûts de fabrication et offrant une grande souplesse d'utilisation.

Pour ce faire, selon une caractéristique de l'invention, l'organe de commande magnétique comporte un piston actionné par un moteur électrique asservi en position, typiquement un moto-réducteur avec dispositif de recopiage en sortie, et sollicitant un organe de sortie coopérant fonctionnellement avec le tiroir modulateur pour en modifier la position en fonction de la position de l'organe de sortie assignée par le piston.

Dans un tel agencement, mettant en oeuvre un moteur électrique asservi, typiquement un moto-réducteur irréversible à fort taux de démultiplication, et un organe de sortie sans contact direct avec le tiroir modulateur, la position de l'organe de sortie peut être déterminée et maintenue très précisément sans nécessiter de circuits de commande et d'exploitation sophistiqués. De plus, la précision de la commande en position de l'organe de sortie permet d'associer à ce dernier une fonction de régulateur supplémentaire.

Ainsi, selon une autre caractéristique de l'invention, l'organe de sortie commande, en fonction de sa position, un passage interne calibré de bi-passe entre les passages d'entrée et de sortie.

Un tel agencement permet, pour un système de direction assistée de véhicule, de moduler continuement le débit adressé au moteur hydraulique d'assistance, et donc de moduler la force d'assistance en fonction du paramètre de commande, typiquement la vitesse du véhicule, et, pour certaines conditions particulières, typiquement pour des vitesses élevées du véhicule, de réaliser, en ouvrant le passage interne calibré de bi-passe, une réduction maximum de l'assistance tout en évitant une cassure trop forte de la courbe pression/couple.

Selon un aspect de l'invention, le tiroir de l'ensemble modulateur comporte une restriction fixe interne et l'organe de sortie forme butée mobile pour une extrémité du ressort de sollicitation de ce tiroir.

Selon un autre aspect de l'invention, le tiroir de l'ensemble modulateur sépare deux chambres communiquant respectivement avec les passages d'entrée et de sortie, l'organe de sortie formant en outre une seconde restriction, modulable en fonction de la position de l'organe de sortie, entre ces deux chambres.

D'autres caractéristiques et avantages de la présente invention ressortiront de la description suivante de modes de réalisation, donnés à titre illustratif mais nullement limitatif, faite en relation avec les dessins annexés, sur lesquels:

- la Figure 1 est un schéma synoptique d'une installation hydraulique de direction assistée de véhicule comportant un premier mode de réalisation de dispositif asservi de contrôle de débit selon l'invention;

- la Figure 2 est une vue en coupe partielle de l'ensemble modulateur de la Figure 1;

- la Figure 3 est une vue similaire à celle de la Figure 2 et montrant un second mode de réalisation de l'ensemble modulateur selon l'invention; et

- la Figure 4 est un diagramme des courbes pression/couple obtenues avec un dispositif asservi de contrôle selon l'invention.

Dans la description qui va suivre, et sur les dessins, les éléments identiques ou analogues portent les mêmes chiffres de référence.

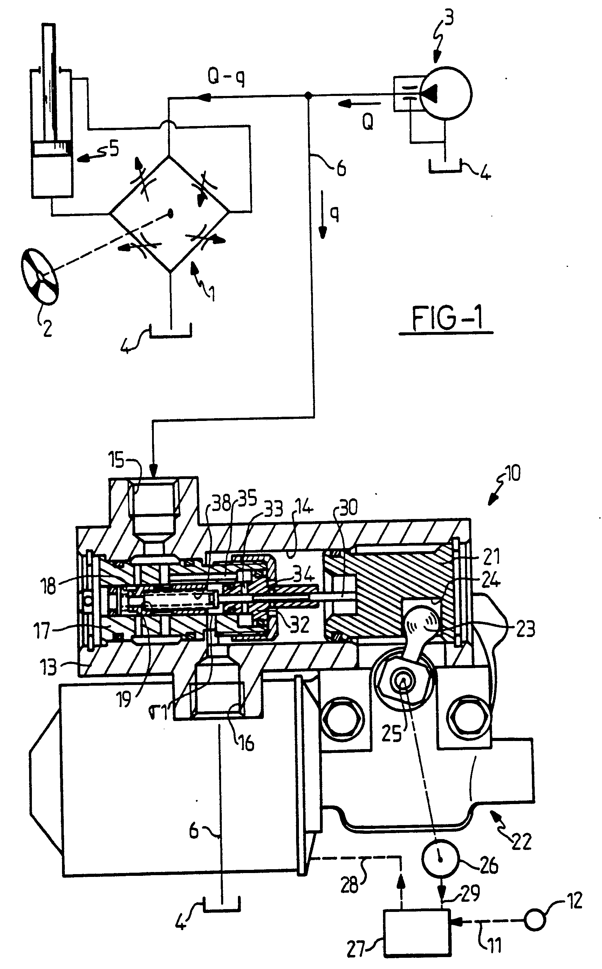

On reconnaît sur le schéma de la Figure 1 un système de direction assistée de véhicule comprenant, de façon connue en soi, une servovalve de distribution 1, actionnée par le volant de direction 2, interposée entre une source de fluide sous pression 3, généralement équipé d'un dispositif régulateur de débit intégré, et une bâche 4 pour alimenter sélectivement et alternativement en fluide sous pression les chambres opposées d'un moteur hydraulique 5 d'assistance de direction. Conformément à l'invention, dans une conduite de dérivation 6, entre la sortie de la source de pression 3 et la bâche 4, est interposé un dispositif, généralement désigné par la référence 10, de contrôle du débit bi-passé dans la conduite de dérivation 6 (et donc soustrait à la servovalve de direction 1) en fonction d'un signal électrique 11 provenant d'un capteur 12 fournissant un paramètre caractéristique, typiquement la vitesse de déplacement du véhicule.

Le dispositif asservi de contrôle de débit 10 selon l'invention comprend un corps 13 dans lequel est formé un logement étagé 14 dans lequel débouchent, axialement espacés l'un de l'autre, un passage d'entrée 15, destiné à être relié à la portion de la conduite de dérivation 6 provenant de la source de pression 3, et un passage de sortie 16 destiné à être relié à la portion aval de la conduite de dérivation 6 communiquant avec la bâche 4. Dans le logement 14 est monté un bloc 17 comportant un alésage central 18 dans lequel est monté à coulissement un tiroir modulateur 19 formant, par son extrémité arrière, une restriction modulable $\sigma_1$ avec un conduit radial 20 formé dans le bloc 17 et communiquant avec l'ouverture de sortie 16. Dans le logement 14 est monté à coulissement sensiblement étanche un piston 21 actionné, par un motoréducteur 22 à commande électrique et à fort taux de démultiplication monté sur le corps 13, via un maneton 23 reçu dans un évidement latéral 24 du piston 21 et couplé à l'arbre de sortie 25 du moto-réducteur 22, le maneton 23 pivotant ainsi en fonction de l'angle de rotation de l'arbre de sortie 25. L'arbre de sortie 25 est couplé à un dispositif de recopiage 26, par exemple à potentiomètre rotatif ou à détecteur optoélectronique fournissant à une unité de commande 27, alimentant le moteur électrique du moto-réducteur 22 par une ligne 28 et recevant le signal d'entrée 11, un signal de retour 29, dans un agencement général de servomoteur asservi en boucle fermée. Le piston 21 sollicite axialement une tige 30 coopérant fonctionnellement avec le tiroir modulateur 19 comme on le verra plus avant.

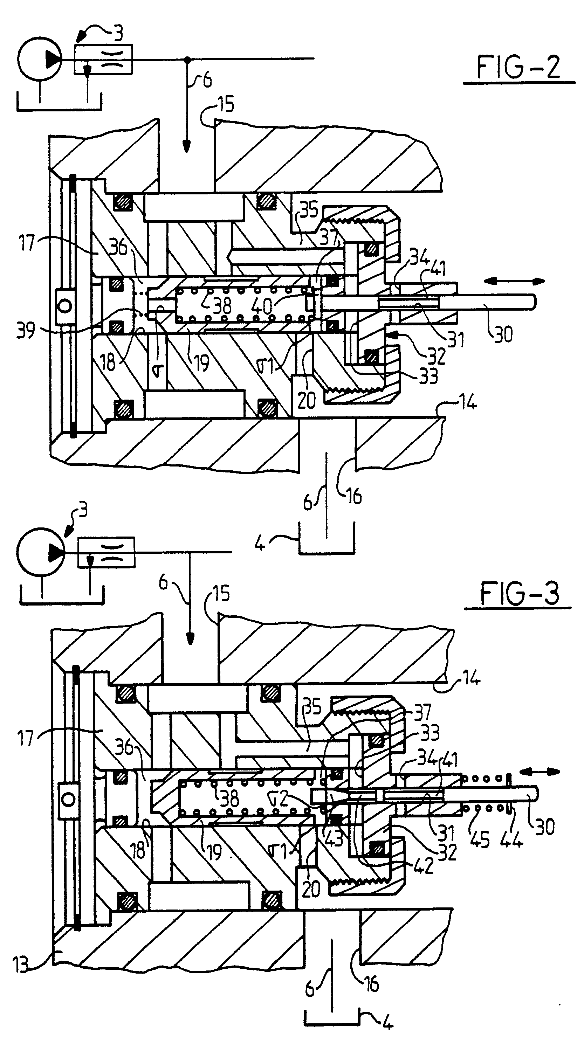

De façon plus spécifique, comme on le voit sur les Figures 2 et 3, la tige 30 est montée à coulissement sensiblement étanche dans un alésage 31, coaxial à l'alésage 18, d'un bloc couvercle 32 rapporté sur le bloc 17 et fermant l'extrémité de l'alésage 18 voisine du conduit 20, l'espace du logement 14 en avant du piston 21 et autour de la tige 30 communiquant librement avec le conduit 20 et le passage de sortie 16. Dans le bloc couvercle 32 sont formées deux ouvertures 33 et 34 débouchant dans l'alésage 31 en des endroits axialement espacés. L'ouverture 33 communique en permanence, via un conduit 35 formé dans le bloc 17, avec le passage d'entrée 15, l'ouverture 34 communiquant en permanence avec le passage de sortie 16. Le tiroir 19 divise l'alésage 18, en une chambre d'entrée 36 communiquant avec le passage d'entrée 15, et une chambre de sortie 37 dans laquelle débouchent le conduit radial 20 et l'extrémité de l'alésage 31 opposée au piston 21. Le tiroir 19 est sollicité dans la direction opposée au bloc couvercle 32 par un ressort taré 38 reçu dans un évidement longitudinal interne du tiroir 19.

Dans le mode de réalisation des Figures 1 et 2, le tiroir 19 comporte une restriction fixe interne établissant une communication entre les chambres 36, 37, le tiroir 19 étant sollicité, à l'encontre du ressort 38, par un second ressort 39 disposé dans la chambre d'entrée 36. Dans ce mode de réalisation, l'extrémité de la tige 30 opposée au piston 21 et faisant saillie dans la chambre de sortie 37 comporte une collerette 40 formant appui mobile pour l'extrémité du ressort 38 opposée à l'appui de ce ressort 38 dans le tiroir 19. Le débit bi-passé dans le conduite de dérivation 6, commandé par la restriction modulable $\sigma_1$, étant proportionnel à la force de tarage exercée par le ressort 38 sur le tiroir 19, le déplacement de la tige 30, à partir de sa position de repos représentée sur la Figure 2, provoque donc une modification de la force du ressort 38 tendant à ouvrir davantage la restriction $\sigma_1$ et donc à augmenter le débit bi-passé dans la conduite 6 lorsque, typiquement, la vitesse du véhicule augmente.

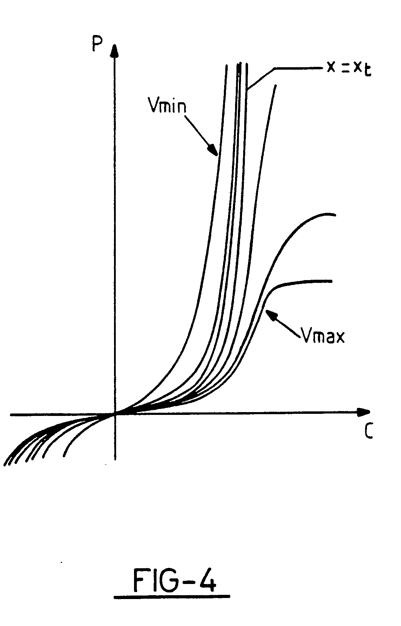

Selon un aspect de l'invention, la tige 30 comporte, dans l'alésage 31, une portion de diamètre réduit 41 susceptible, lorsque la tige 30 s'est déplacée, dans la direction vers la chambre d'entrée 36 d'une valeur $x_t$ déterminée, d'établir une communication directe entre les ouvertures 33 et 34, en établissant ainsi un passage de bi-passe interne calibré entre les passages d'entrée 15 et 16, en parallèle de la restriction modulable $\sigma_1$. Comme on le voit sur la Figure 4, tant que la tige 30 n'a pas été déplacée d'une distance supérieure à $x_t$, la modification de la force du ressort 38 permet d'obtenir, pour des vitesses moyennes ou basses du véhicule, différentes courbes décalées légèrement les unes des autres. Par contre, lorsque la tige 30 a été déplacée d'une distance supérieure à la distance $x_t$, et que la tige 30 continue d'être déplacée vers la chambre d'entrée 36, on obtient alors des courbes tendant sensiblement asymptotiquement vers des valeurs limites différentes.

Le mode de réalisation représenté sur la Figure 3 est, dans ses grandes lignes, identique à celui qui vient d'être décrit en relation avec les Figures 1 et 2, les différences résidant dans le mode de coopération fonctionnel entre la tige 30 et le tiroir 19. Dans ce mode de réalisation, le tiroir 19 sépare de façon étanche les chambres d'entrée 36 et de sortie 37 et est sollicité par le seul ressort 38. Dans ce mode de réalisation, la tige 30 comporte, du côté de son extrémité opposée au piston d'actionnement 21, une seconde partie de diamètre réduit 42, séparée axialement de la première partie de diamètre réduit 41 par une portion de tige au diamètre de l'alésage 31, cette seconde partie de diamètre réduit 42 se prolongeant, vers l'extérieur, par une zone profilée allant s'élargissant 43 et formant, avec l'extrémité de l'alésage 31 débouchant dans la chambre de sortie 37, une seconde restriction modulable $\sigma_2$ entre la chambre arrière 37 et l'ouverture 33 du bloc couvercle 32 communiquant avec le passage d'entrée 15. Ainsi, en fonction du déplacement de la tige 30, la restriction modulable $\sigma_2$ crée, dans la chambre arrière 37, une contre-pression modulée déterminant, avec le ressort 38, la position du tiroir 19 et, partant, la dimension de la première restriction modulable $\sigma_1$, le tiroir 19 étant ainsi piloté hydrauliquement mais assurant le même fonctionnement que dans le mode de réalisation précédemment décrit. La tige 30 comporte avantageusement une collerette extérieure 44 pour un ressort de rappel 45 prenant appui sur l'arrière du bloc couvercle 32.

Quoique la présente invention ait été décrite en relation avec des modes de réalisation particuliers, elle ne s'en trouve pas limitée, mais est au contraire susceptible de modifications et de variantes qui apparaîtront à l'homme de l'art.

**Revendications**

1. Dispositif asservi de contrôle de fluide pour installation hydraulique (1, 5), notamment pour direction assistée de véhicule, comprenant une source de pression (3) dont la sortie est reliée à un système de commande (1) de moteur hydraulique (5), le dispositif (10) étant destiné à être interposé dans une conduite de dérivation (6) entre la sortie de la source de pression (3) et une bâche (4) et comprenant: dans un corps (13), un ensemble modulateur avec un tiroir (19) sollicité par un ressort (38) et formant une première restriction ($\sigma_1$) modulable entre un passage d'entrée (15), destiné à être relié à la sortie de la source de pression (3), et un passage de sortie (20, 16), destiné à être relié à la bâche (4), la position du tiroir (19) étant pilotée, en fonction d'un signal électrique de commande (11), par un organe de commande électromagnétique (22), caractérisé en ce que l'organe de commande électromagnétique comporte un piston (21) actionné par un moteur électrique asservi (22) et sollicitant un organe de sortie (30) coopérant fonctionnellement avec le tiroir modulateur (19) pour en modifier la position en fonction de la position de l'organe de sortie (30) assignée par le piston (21).

2. Dispositif selon la revendication 1, caractérisé en ce que l'organe de sortie (30) commande, en fonction de sa position, un passage interne calibré de bi-passe (33, 34) entre les passages d'entrée (15) et de sortie (16).

3. Dispositif selon la revendication 1 ou la revendication 2, caractérisé en ce que le tiroir (19) comporte une restriction interne fixe ($\sigma$) et en ce que l'organe de sortie (30) forme butée mobile (40) pour une extrémité du ressort (38) de sollicitation du tiroir (19).

4. Dispositif selon la revendication 1 ou la revendication 2, caractérisé en ce que le tiroir (19) sépare deux chambres (36; 37) communiquant respectivement avec les passages d'entrée (15) et de sortie (16), et en ce que l'organe de sortie (30) forme en outre une seconde restriction ($\sigma_2$), modulable en fonction de la position de l'organe de sortie, entre les deux chambres (36; 37).

5. Dispositif selon l'une des revendications 1 à 4, caractérisé en ce que le tiroir (19) est monté à coulissement dans un premier alésage (18), l'organe de sortie (30) étant constitué d'une tige montée à coulissement sensiblement étanche dans un second alésage (31) coaxial au premier et débouchant dans celui-ci, et dans lequel débouchent, en des endroits axialement distants, des ouvertures (33; 34) communiquant respectivement avec les passages d'entrée (15) et de sortie (16), la tige (30) comportant une portion de diamètre réduit (41) susceptible d'établir une communication entre lesdites ouvertures (33, 34).

6. Dispositif selon la revendication 4 et la revendication 5, caractérisé en ce que la tige (30) comporte en outre une portion d'extrémité profilée (43, 42) opposée au piston (21) coopérant avec le second alésage (31) pour constituer la seconde restriction modulable ($\sigma_2$).

7. Dispositif selon l'une des revendications précédentes, caractérisé en ce que le piston (21) est monté à coulissement dans un logement (14) étagé du corps (13) le tiroir (19) et l'organe de sortie (30) étant agencés dans un sous-ensemble (17, 32) rapporté dans ledit logement (14).

8. Dispositif selon l'une des revendications précédentes, caractérisé en ce que le piston (21) est actionné par un maneton pivotant (23) couplé à l'axe de sortie (25) d'un moto-réducteur (22) monté sur le corps (13).

**Patentansprüche**

1. Strömungsmittelsteuerungs-Servovorrichtung für eine hydraulische Anlage (1, 5), insbesondere für eine Fahrzeug-Servolenkung, mit einer Druckquelle (3), deren Auslaß mit einem Hydraulikmotor (5)-Betätigungssystem (1) verbunden ist, wobei die Vorrichtung (10) in eine Zweigleitung (6) zwischen dem Auslaß der Druckquelle (3) und einem Sammelbehälter (4) einsetzbar ist und in einem Gehäuse (13) eine Modulationsanordnung mit einem Schieber (19) aufweist, der von einer Feder (38) vorgespannt wird und eine erste änderbare Drosselstelle ($\sigma_1$) zwischen einem Einlaßkanal (15) und einem Auslaßkanal (20, 16) bildet, von denen der Einlaßkanal mit dem Auslaß der Druckquelle (3) und der Auslaßkanal mit dem Sammelbehälter (4) verbindbar ist, wobei die Stellung des Schiebers (19) in Abhängigkeit von einem elektrischen Betätigungssignal (11) durch ein elektromagnetisches Steuerglied (22) vorgesteuert wird, dadurch gekennzeichnet, daß das elektromagnetische Steuerglied einen Kolben (21) aufweist, der von einem elektrischen Servomotor (22) betätigt wird und ein Ausgangsglied (30) vorspannt, das mit dem Modulationsschieber (19) funktionsmäßig zusammenwirkt, um seine Lage in Abhängigkeit von der Lage des Ausgangsgliedes (30) zu modifizieren, die ihm von dem Kolben (21) zugewiesen ist.

2. Vorrichtung nach Anspruch 1, dadurch gekennzeichnet, daß das Ausgangsglied (30) in Abhängigkeit von seiner Stellung einen kalibrierten internen Bypasskanal (33, 34) zwischen dem Einlaßkanal (15) und dem Auslaßkanal (16) stuert.

3. Vorrichtung nach Anspruch 1 oder 2, dadurch gekennzeichnet, daß der Schieber (19) eine festgelegte innere Drosselstelle (σ) aufweist und daß das Ausgangsglied (30) einen beweglichen Anschlag (40) für ein Ende der Feder (38) zum Vorspannen des Schiebers (19) bildet.

4. Vorrichtung nach Anspruch 1 oder 2, dadurch gekennzeichnet, daß der Schieber (19) zwei Kammern (36; 37) trennt, die mit dem Einlaßkanal (15) bzw. dem Auslaßkanal (16) in Verbindung stehen, und daß das Auslaßglied (30) ferner eine in Abhängigkeit von der Lage des Ausgangsgliedes modulierbare zweite Drosselstelle (σ2) zwischen den beiden Kammern (36; 37) bildet.

5. Vorrichtung nach einem der Ansprüche 1 - 4, dadurch gekennzeichnet, daß der Schieber (19) in einer ersten Bohrung (18) gleitend gelagert ist, wobei das Ausgangsglied (30) von einer Stange gebildet wird, die im wesentlichen abgedichtet in einer Zweitbohrung (31) gleitend gelagert ist, die koaxial zur ersten verläuft und in dieser mündet und in welche an axial auseinanderliegenden Stellen Öffnungen (33; 34) münden, die mit dem Einlaßkanal (15) bzw. dem Auslaßkanal (16) in Verbindung stehen, wobei die Stange (30) einen durchmesserverringerten Abschnitt (21) aufweist, der eine Verbindung zwischen diesen Öffnungen (33, 34) herstellen kann.

6. Vorrichtung nach Anspruch 4 und Anspruch 5, dadurch gekennzeichnet, daß die Stange (30) ferner einen dem Kolben (21) gegenüberliegenden profilierten Endabschnitt (43, 42) aufweist, der mit der zweiten Bohrung (31) zusammenwirkt, um die modulierbare zweite Drosselstelle (σ2) zu bilden.

7. Vorrichtung nach einem der vorhergehenden Ansprüche, dadurch gekennzeichnet, daß der Kolben (21) in einem abgestuften Raum (14) des Gehäuses (13) gleitend gelagert ist, wobei der Schieber (19) und das Ausgangsglied (30) in einer Untereinheit (17, 32) zusammengefaßt sind, welche in diesem Raum (14) untergebracht ist.

8. Vorrichtung nach einem der vorhergehenden Ansprüche, dadurch gekennzeichnet, daß der Kolben (21) durch einen schwenkbaren Zapfen (23) betätigt wird, der mit der Abtriebswelle (25) eines Getriebemotors (22) gekoppelt ist, welcher an dem Gehäuse (13) angebracht ist.

## Claims

1. A servo device for controlling the fluid of a hydraulic system (1, 5), in particular the power-assisted steering of a vehicle, comprising a pressure source (3) having an outlet which is connected to a system (1) for controlling a hydraulic motor (5), the device (10) being intended to be interposed in a branch line (6) between the outlet of the pressure source (3) and a tank (4), and comprising: inside a body (13), a modulator assembly with a slide (19) biased by a spring (38) and forming a first variable constriction ($\sigma_1$) between an inlet passage (15), intended to be connected to the outlet of the pressure source (3), and an outlet passage (20, 16), intended to be connected to the tank (4), the position of the slide (19) being controlled, in dependence of an electrical control signal (11), by an electromagnetic actuating member (22), characterized in that the electromagnetic actuating member has a piston (21) which is actuated by an electrical servomotor (22) and which biases an output member (30) cooperating functionally with the modulator slide (19) so as to modify its position in accordance with the position of the output member (30) determined by the piston (21).

2. Device according to Claim 1, characterized in that the output member (30) regulates, in accordance with its position, a calibrated internal bypass passage (33, 34) between the inlet passage (15) and the outlet passage (16).

3. Device according to Claim 1 or Claim 2, characterized in that the slide (19) has a fixed internal constriction ($\sigma$) and in that the output member (30) forms a moveable stop (40) for one end of the spring (38) biasing the slide (19).

4. Device according to Claim 1 or Claim 2, characterized in that the slide (19) separates two chambers (36, 37) communicating with the inlet passage (15) and the outlet passage (16), respectively, and in that the output member (30) further forms, between the two chambers (36; 37), a second variable constriction ($\sigma_2$), in accordance with the position of the output member.

5. Device according to one of Claims 1 to 4, characterized in that the slide (19) is slideably mounted inside a first bore (18), the output member (30) consisting of a rod slideably and sealingly mounted inside a second bore (31) which is coaxial with the first bore and opens into the latter and into which open, at points axially spaced from each other, openings (33, 34) communicating with the inlet passage (15) and the outlet passage (16), respectively, the rod (30) having a portion of reduced diameter (41) capable of establishing a communication between the said openings (33, 34).

6. Device according to Claim 4 and Claim 5, characterized in that the rod (30) further has a profiled end portion (43, 42) located opposite the piston (21) and cooperating with the second bore (31) so as to form the second variable constriction ($\sigma_2$).

7. Device according to one of the preceding claims, characterized in that the piston (21) is slideably mounted in a stepped recess (14) in the body (13), the slide (19) and the output member (30) being arranged in a sub-assembly (17, 32) arranged inside the said recess (14).

8. Device according to one of the preceding claims, characterized in that the piston (21) is actuated by a pivoting crank pin (23) coupled to an output spindle (25) of a speed-reducing unit (22) mounted on the body (13).

FIG-1

FIG-2

FIG-3

FIG-4